# EUROPEAN PATENT APPLICATION

(11) **EP 1 785 922 A1**
(43) Date of publication of application: **16.05.2007**
(21) Application number: 05077571.7
(22) Date of filing: 10.11.2005
(51) Int. Cl.: G06Q 10/00

(54) **A system for automatically reassigning an order confirmation in response to an incoming order, a computer implemented method, a user terminal and a computer readable storage medium**

(71) Applicant: SAP AG, 69190 Walldorf (DE)
(72) Inventor: Helmolt, Hans-Ulrich, D-69121 Heidelberg (DE); Mayer, Thomas, D-69181 Leimen (DE); Esau, Andreas, D-76684 Östringen (DE)
(74) Representative: Winckels, Johannes Hubertus F.

(57) **Abstract**

The invention relates to a system for automatically reassigning an order confirmation in response to an incoming order, the system comprising:
an inbound interface for interfacing with a plurality of data storage devices in at least one of which an incoming order is stored as data and a plurality of confirmed sales orders are stored;
an execution memory operable to hold a software system, and
a processor for coupling to the inbound interface and the execution memory, the processor being operable to execute the software system such that the software system operates:
to determine the eligibility of the incoming order to determine whether goods from at least one of the confirmed sales order may be reassigned to the incoming order, to reassign goods from the at least one of the plurality of confirmed sales order to the incoming order if the determination is positive.

## Description

The invention relates to a system for automatically reassigning an order confirmation in response to an incoming order, a computer implemented method, a user terminal and a computer readable storage medium. Supply chain management software systems are known, for example, SAP's Supply Chain Management system. Such a supply chain management system includes a plurality of applications for implementing the management of the supply chain. These applications are for example SAP Advanced Planning and Optimization (SAP APO) and Extended Warehouse Management (EWM). A core interface (CIF) connects SAP SCM with online transaction processing systems (OLTP), such as SAP Customer Relations Management (SAP CRM) and Enterprise Resource Planning (ERP). In particular, the core interface connects the OLTP to the SAP APO. In supply chain management, when a product is available to be promised to a customer it is "available to promise" (ATP). Supply chain management systems including available to promise (ATP) functionality are known. Supply Chain Management applications, such as SAP APO include ATP functionality. Such systems include software for determining whether a product is available to promise. The determination may include performing an availability check when a customer calls to place an order.

In conventional supply chain management systems, the confirmation of a sales order at the cost of another item was possible only by starting backorder processing manually or in a batch mode, or by manual interference.

During the creation or change of a sales order term, an availability check normally will be executed. If all possibilities of a global (rules based) ATP to confirm the corresponding item are exhausted and at the same time there exist document items of lower priority, it is not possible to obtain the confirmation at the cost of these items in real time. A subsequent realignment of the confirmed quantity is only possible by a mass availability check run initiated at predefined points in time or by manual reduction of the confirmation and a manual reassignment of the freed quantity to the newly added item.

It is desirable to address those problems identified in conventional systems. In particular, it is desirable to improve the performance aspects of the availability check to ensure that available quantity can be assigned to sales orders more quickly. Thus, it is further desirable to increase the speed with which aspects of the application availability check can be carried out.

To address the above mentioned problems, there is provided according to a first aspect of the invention, a system for automatically reassigning an order confirmation in response to an incoming order, the system comprising: an inbound interface for interfacing with a plurality of data storage devices in at least one of which an incoming order is stored as data and a plurality of confirmed sales orders are stored; an execution memory operable to hold a software system, and a processor for coupling to the inbound interface and the execution memory, the processor being operable to execute the software system such that the software system operates: to determine the eligibility of the incoming order to determine whether goods from at least one of the confirmed sales order may be reassigned to the incoming order, to reassign goods from the at least one of the plurality of confirmed sales order to the incoming order if the determination is positive. In this way, a real time reassignment of order confirmations is carried out.

According to a second aspect of the invention, there is provided a computer implemented method of automatically reassigning an order confirmation in response to an incoming order, the method comprising: interfacing with a plurality of data storage devices in at least one of which an incoming order is stored as data and a plurality of confirmed sales orders are stored; coupling to the inbound interface and the execution memory, executing a software system: to determine the eligibility of the incoming order to determine whether goods from at least one of the confirmed sales order may be reassigned to the incoming order, to reassign goods from the at least one of the plurality of confirmed sales order to the incoming order if the determination is positive.

According to a third aspect of the present invention, there is provided a user terminal comprising means operable to perform the method of claim 9.

According to a fourth aspect of the present invention, there is provided a computer readable storage medium storing a program which when run on a computer controls the computer to perform the method of claim 9.

By way of example only, embodiments of the present invention will now be described with reference to the accompanying Figures in which:
Figure 1 shows the process steps of a reassignment of order confirmation according to an embodiment of the invention;
Figure 2 shows a rules evaluation and an availability check for a reassignment of an order confirmation according to an embodiment of the invention;
Figure 3 shows a workflow according to an embodiment of the invention;
Figure 4 shows backorder processing (BOP) within which an embodiment of the invention has application;
Figure 5 shows an item update including a reassignment of an order confirmation according to an embodiment of the invention, and
Figure 6 shows an activated ODL according to an embodiment of the invention.
Like reference numerals indicate like elements.

As mentioned, SAP CRM or ERP are OLTP systems. SAP CRM and ERP are systems for the daily online transaction processing, where, for example, the sales orders are entered. SAP APO is a component of SCM. SAP APO is a logistic planning system. ATP is a component of SAP APO. A core interface CIF connects the OLTP to the SAP APO. It provides functions to transfer the business data between the two types of systems. An availability check is carried out when a customer enquires about placing an order. ATP is the component that executes the availability check. The availability check takes into account existing stock and also the quantities of future incoming or outgoing orders that should be delivered by the date of the order to determine whether the product is available to promise. If a quantity (of stock or an incoming order) is promised to a first customer, a second customer cannot access the reserved quantity. If there is not enough quantity to honor a complete order, as requested, the order can be confirmed at a later data or may stay unconfirmed respectively partially confirmed. Available to promise functionality can be carried out on two levels: a global level in which complete functionality is provided or on a basic level in which real stock is assessed in determining whether a product is available to promise. If the product is available to promise, the order can be confirmed. The availability check is checked against the forecast of stock expected to be delivered. In this way, the system checks whether the customer needs will be satisfied from planned orders. Further, in a situation where there are several orders which cannot all be confirmed, those order which cannot be confirmed become back orders. Back orders are sales documents whose order items cannot be completely confirmed at the material availability date of the requested delivery date due to lack of availability or material shortages. Orders, including back orders, may be assigned a priority rating. For example, a high priority order and a low priority order. If a high priority order cannot be confirmed immediately, it becomes a back order. Back order processing (BOP) is a technical vehicle for dealing with back orders. BOP is an availability check tool, for example in SAP APO. Using BOP, an available quantity of one or more products can be reallocated using a quantity of selected requirements. BOP may be carried out as interactive BOP or batch BOP.

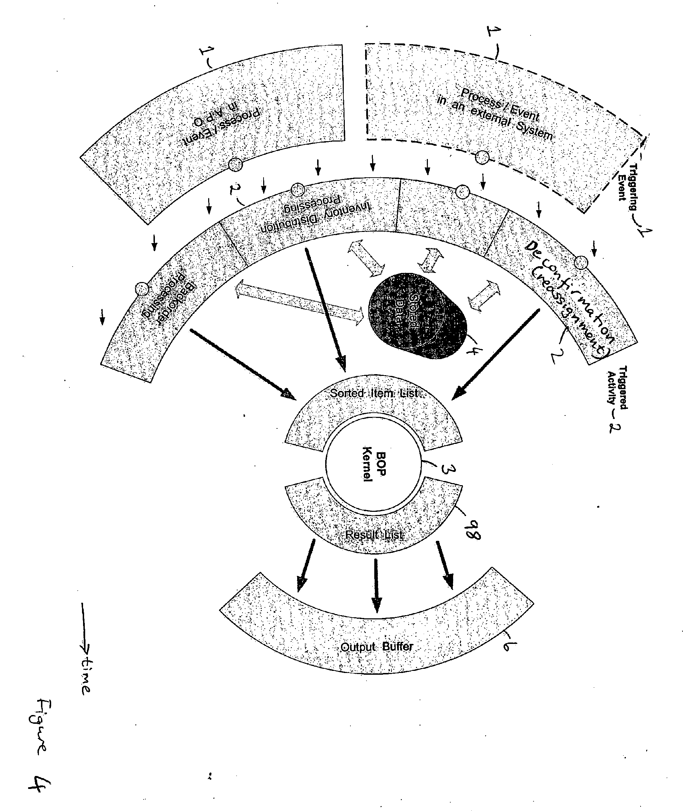

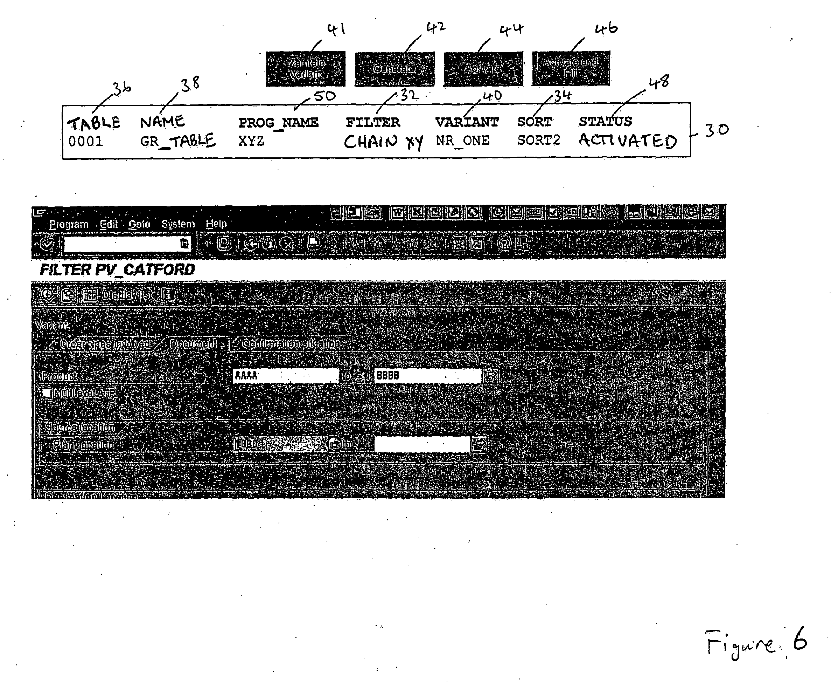

In accordance with an embodiment of the invention, the event triggers a redistribution of the quantity, for example on cost of lower priority orders. This may be achieved using event driven quantity assignment services, wherein one or more activities, for example, backorder processing, are defined with respect to an event, as shown and described with respect to Figure 4. Further, an order due list, described in further detail with respect to Figures 6, may be assigned to the event. In particular, the order due lists restricts the number of order that are looked into in order to identify the affected items. Depending on the parameter values that are valid in the particular inbound interface, different ODLs can be used. The potential amount of items that are to be confirmed can be kept small by customizing the ODL. In this way, the speed of the assignment is improved. Further by customizing the ODL, for example, to identify low priority orders, their quantity can be assigned to those orders having the highest business priority. Thus, improving the efficiency of the business.

If the system is unable to confirm an order, rules based ATP (RBA) is carried out. A rules based availability check can be used to automatically or manually optimize the decision making process between alternatives using predefined rules. A sales order item may be confirmed on basis of RBA. After saving the sales order, its data from an OLTP system are stored in live cache and several database tables in SAP SCM. In general and with view to RBA, such an item can be replaced by another item with product / location that differs from the original. This replacement can be executed by means of backorder processing (BOP). A problem in conventional supply chain management systems is that it is not possible to determine the item that can possibly receive the quantity on replacing product/location, because it is necessary to evaluate RBA anew at the moment of selection. In conventional systems a quick search of affected items is not possible. In particular, in conventional systems, once a sales order is saved, a complete rules evaluation is necessary. Thus, the quality and speed of the availability check is compromised. If the system is unable to confirm an order, rules based ATP (RBA) is carried out. Rules based availability check can be used to automatically or manually optimize the decision making process between alternatives using predefined rules. In a sales order RBA can cause creating of a main item with several sub-items reflecting the alternatives on product/location level. In RBA, additional criteria are defined in order to determine the outcome, if the order cannot be confirmed. For example, if a customer orders a yellow car, the rule may specify that he will be given a red car instead. Similarly, if the order cannot be confirmed from stock in a first manufacturing location, the rule may specify that the order is honored from stock in a second manufacturing location. In this way, global ATP is provided, to allow, for example, a switch between locations.

According to an embodiment of the invention, the eligibility of an order item to be confirmed at the cost of other already confirmed order items is determined. Reassignment of order confirmation is a process that is initiated by global (rules based) ATP if all possibilities for confirmation of a higher priority item are exhausted. The process confirms the higher priority item, selects and de-confirms lower priority items(s) according to a sort profile defined in an ODL. The sort profile defines the sequence in which the items have to be selected. Sort profile specifies the characteristics, their sequence (or weighting), and the sort direction.

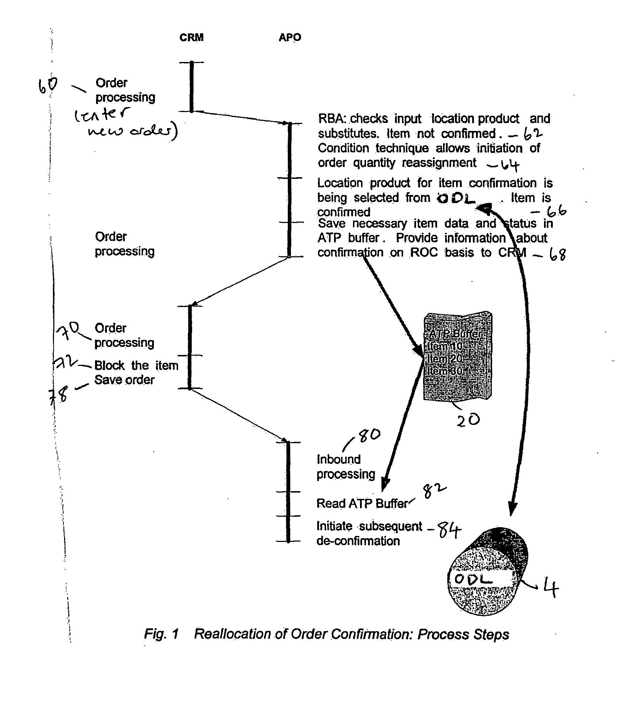

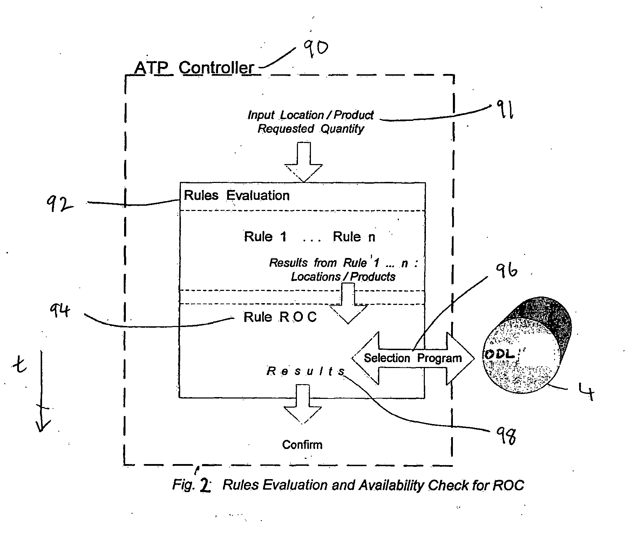

The eligibility determination is embedded in the rules based ATP. The order is eligible to be confirmed at the cost of others, if rules evaluation during the ATP check leads to a rule, where a special indicator, also referred to as ROC (reassignment of order confirmations) is on. In this case, the system automatically selects potential donating items corresponding to the required quantity. Potential donors are kept in an order due list. Order due lists are described in more detail below. The confirmation of he initiating item on ROC basis is labelled as preliminary and this is also communicated to the order management system. This is done to enable the OLTP system to avoid execution steps before the subsequent de-confirmation of the donating item is finished. Only then, may the release of the confirmed item occur. The de-confirmation of donating items is initiated after the order eligible to obtain confirmation on cost of other documents is saved. For this reason in event driven global available to promise services in a supply chain management system, such as SAP SCM, a process category for reassignment of order confirmations can be defined. The activity "Sales order confirmation (ROC result)" is assigned in the process category to the corresponding event that finally shall trigger the donor de-confirmation. The de-confirmation process is based on mass availability check (Backorder Processing) using order due lists. The process is embedded into a workflow model. By means of SAP business workflow the system can react to (un-)successful process progression. The last process step is updating the order that was eligible to be confirmed at the cost of other order items. Hereby, the initiating order can be de-confirmed as well, if the de-confirmation process is unsuccessful. During the whole process the ATP quantity is protected by temporary quantity assignments that are assigned to the donating respectively initiating items. In conventional systems, a redirection of the available quantity from lower priority items to higher priority items was only possible by mass availability check runs initiated at predefined points in time. This time delay leads to a business impact since confirmation of important orders is not possible at the moment of their creation. However, using reassignment of order confirmations in the supply chain management system, such as SAP SCM, in accordance with an embodiment of the invention, it is possible to trigger the quantity redirection immediately after the profiting sales order is saved. In this way, if a very important order is received for an important customer, a high priority order, quantities from unimportant orders, low priority orders, can be assigned. The low priority orders are stored in an order due list. In this way, the reassignment can be carried out online. In an embodiment of the invention, reassignment of order confirmations can be used within the framework of the ATP check, as described and shown with reference to Figures 1 and 2.

Figure 1 shows the process steps of a reassignment of order confirmations according to an embodiment of the invention. The process initiation is embedded in the rules based ATP. When no confirmation of higher priority item was possible, the contents of an ODL with items to be de-confirmed are checked. Location products that were determined there are saved in the confirmed item. Information for subsequent process steps (de-confirmation of lower priority items) is stored in the ATP buffer 20. After the sales order is stored (step 78) in the OLTP system, the contents of the ATP buffer 20 are analyzed in the SAP APO inbound interface (step 80). If necessary, an event is raised and a workflow for de-confirmation of lower priority items is started. In particular, Figure 1 shows the interaction between SAP CRM and SAP APO according to an embodiment of the invention. In SAP CRM a new order is entered (step 60) in order processing. For example, the new order may include a product, an amount and a date for delivery. Once entered, SAP APO carries out an availability check, for example, a RBA (step 62). The availability check includes checking input location product and substitutes. As shown in the embodiment, the item is not confirmed. ATP rules allow initiation of order quantity reassignment (ROC) (step 64). The location product for item confirmation is selected from ODL which is stored in a database 4. The item is confirmed (step 66). Subsequently, the necessary item data is saved in the ATP buffer 20 and information about the confirmation on ROC basis is provided to SAP CRM (step 68). The order processing continues (step 70). For example, the item is blocked for further execution steps (step 72) and the order is saved in SAP CRM (step78). In the SAP APO inbound processing (step 80), the contents of the ATP buffer 20 is analyzed in the inbound interface for sales orders (step 82). Further, as mentioned above, the subsequent de-confirmation is initiated (step 84). The principle of a higher priority item is reflected in an enhancement of rules, where a rule for ROC is implemented. Eligibility to initiate ROC can be checked by means of condition technique within the RBA. The initiation of ROC may be dependent on different parameters, e.g. customer/order, which value(s) may allow or may not allow ROC. Condition technique is used for this purpose.

Figure 2 shows a rules evaluation and an availability check for a reassignment of an order confirmation according to an embodiment of the invention. The 'reassignment of order confirmations' indicator is included in the rules in RBA. Table 1 shows the rules applying to two sales orders for phones from a customer.

**Table 1**

| Product | Customer | Rule to be applied |
|---|---|---|
| phone | Customer LP | Rule 10 |
| phone | Customer HP | Rule 20 |

For the low priority customer, Customer LP, for his sales order relating to a phone, Rule 10 will be applied during the availability check. Rule 10, for example, is a particular rule applied to this type of customer and may include rules such as if phone is not available from location A, source phone from location B, etc. For the high priority customer, Customer HP, for his sales order relating to a phone, Rule 20 will be applied during the availability check. Rule 20 may be similar to Rule 10. However, additionally it's 'reassignment of order confirmations' indicator is set.. So that if the order cannot be confirmed using the other rules, the order may be confirmed at the cost of other already confirmed orders, for example, from low priority customers, such as Customer LP.

In Figure 2, an ATP controller 90 carries out a rules evaluation (step 92) on receipt of an input location product, with a requested quantity and requested delivery date (step 91) in the SAP APO. The rules evaluation functionality is enhanced for rules with type "Reassignment of order confirmations" 94. In contrast to conventional RBA, a selection of valid location products is performed based on ODL entries stored in a database 4. Presupposing that a separate ODL for order confirmations (lower priority items) is activated, a selection program 96 is executed. The selection program 96 is executed in the following way: all in-house location products, e.g. location type=plant, that were determined by previous rules up to the current rule evaluation are taken as input for the selection from the ODL. Herewith the eligibility of sourcing rules is guaranteed: such restrictions like exclusions etc. are considered automatically. The sequence of location products stays the same after the selection from the ODL: prioritization of the ODL sort profile is valid within one location product. Further, the item level of an item structure (one to many, kit to, ...) is considered. The quantity that has to be confirmed and the requested delivery date also drive the selection. Selection considers temporary quantity assignments, which are possible created by reallocation processes running in parallel. Selection code is generated by an ODL builder at the time of the ODL generation. The result 98 of the selection is a list of location products that were selected from the ODL according to the sort profile. The table includes the following data: location selected from the ODL, product selected from ODL, confirmation time stamp to be appended into result structure, confirmed quantity to be appended into result structure, identifier of the item (GUID) to be de-confirmed.

The following situations will be differentiated after the selection result analysis: selected confirmation amount matches the required quantity fully with one or more location products. Result table exported to the controller 90 contains this confirmation data. Selected confirmation amount is lower than the required quantity. In this case, possibly existing subsequent rule(s) of the rule strategy or rule strategy sequence are evaluated, which is a standard system behavior.

Based on the result table 98 returned from the rules evaluation 92, the availability check controller 90 creates a new requirement group and if the result table contains confirmation data, confirm the item according to the given results without performing basic method checks. The following cases are considered: if no results are returned, the controller 90 finishes the RBA. If results with confirmation data exist, the new items will be confirmed completely. Sub-items can be created for location products that differ to the input. If results exist that do not contain confirmation data, an ATP check for the new items is performed according to their check instruction.

Furthermore, the ATP controller 90 creates temporary quantity assignments for the confirmed item and for items to be de-confirmed.

Data necessary for the de-confirmation of lower priority items is saved as a table in the ATP buffer 20 until the high priority order item is saved in SAP APO. A table record corresponding to an item that has to be do-confirmed contains the following data: item identifier (GUID), usage parameter, e.g. reassignment. If the ATP buffer 20 contains item data that may exist from the previous ATP check, it is replaced with the most recent set.

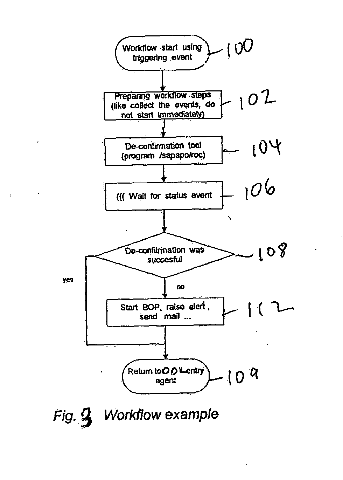

Figure 3 shows an example of de-confirmation workflow model according to an embodiment of the invention. The de-confirmation process is implemented in a workflow. The event reassignment of order confirmations is defined as a triggering event in the workflow. Alternatively, it may be created as a separate workflow. The workflow starts using the triggering event (step 100). A preparation step is executed, for example, wait until the saved high priority order data are stored in SAP APO (step 102). Then a de-confirmation BOP imports the item list from the inbound interface via temporary data storage (ATP buffer) and updates the OLTP system (step 104). The status of the executed de-confirmation BOP is waited for (step 106). The status event informs the workflow about (un-) successful item updates (step 108). No further steps are executed, if de-confirmation was successful (step 109). If the de-confirmation was not successful, subsequent steps can be initiated (step 112). This can be for example raising an alert.

As mentioned above, the de-confirmation run within the reassignment of order confirmations is executed by means of backorder processing. Such an embodiment is shown in Figure 4 wherein backorder processing (BOP) including an embodiment of the invention is shown. Figure 4 shows a flexible assignment of pre-defined events and triggering modules to start workflows that are related to back order processing (BOP). De-confirmation (reassignment) is a tool uses ODLs as input for reassignment of orders after being triggered, by event ROC. De-confirmation within ROC uses a processor, in particular, BOP kernel 3 and its output mechanism. Once the high priority order is saved, ROC de-confirmation may be triggered, as the triggered activity 2. ROC 2 reads the ATP buffer stored in database 4. The ATP buffer contains a list of items to be de-confirmed, which were selected during the ATP check, before saving the high priority order. Subsequently, BOP is carried out by the BOP kernel 3. In this way, those items having the most business importance may be confirmed at the cost of lower priority confirmed orders. Order due lists are described in further detail with reference to Figure 6. The result list 98 of the BOP is provided to an output buffer 6, which may for example, be the SAP APO storage system. The result list in the output buffer is subsequently sent to OLTP system.

In the case where the invention can be applied in back order processing, a processor 3, such as a back order kernel 3 carries out the de-confirmation, can include an availability check.

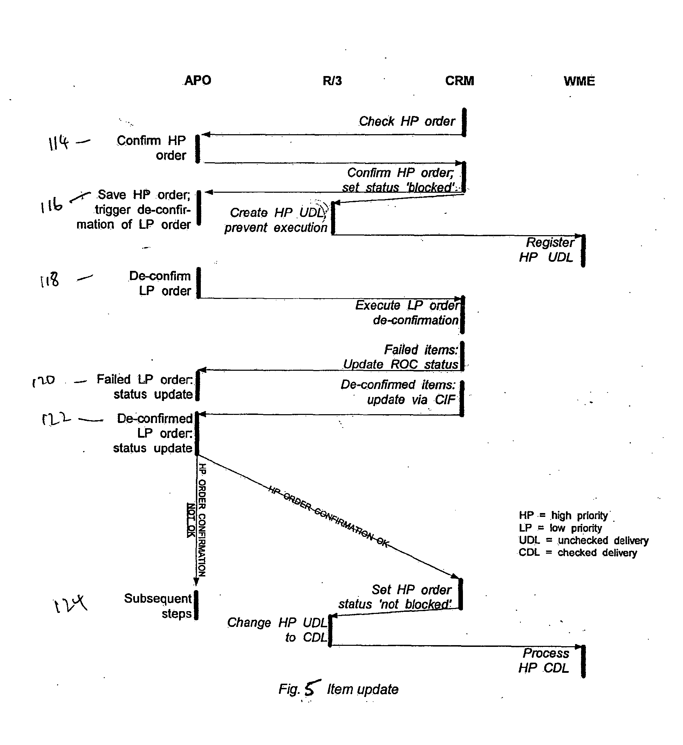

Figure 5 shows an item update including a reassignment of an order confirmation according to an embodiment of the invention. In particular, Figure 5 shows the process steps in SAP APO in correlation with process steps in order/delivery/warehouse management systems, ERP, SAP CRM, EWM, respectively. The confirmation of a higher priority order in SAP APO involves the order management system SAP CRM. In particular, it is expected that the order management system makes subsequent execution steps (creation of checked delivery) in ERP impossible, if the high priority item was confirmed by ROC and the de-confirmation of low priority order items is not yet processed. The high priority order is saved (step 116). The update of high priority sales order items obeys the currently being used SAP APO inbound processes for sales orders. As described, the subsequent de-confirmation of lower priority items is initiated (step 118). Subsequently, when at least 1 item failed, the status of the failed low priority items is updated (step 120). Further, the status of de-confirmed lower priority items is updated (step 122). Update of successfully proceeded sales order items obeys that currently being used in BOP update process. The de-confirmed item is then re-processed in the order management system automatically including the processing rules of the order management. The following subsequent steps (step 124) may be implemented in SAP APO in a workflow if the de-confirmation of low priority items was not successful: for example, subsequent selection of low priority items and de-confirmation may be repeated. In this case, based on the transaction identifier of the ROC process (the identifier will stay the same) and the list of failed or successfully processed items, only low priority items selected anew are taken into account during de-confirmation. Further, an alert may be raised.

The order management system is updated: the high priority order is released so that subsequent execution steps, for example, conversion of unchecked delivery in checked delivery, are possible.

Order due lists are herein described in further detail with reference to Figure 6. As described reassignment of order confirmation (ROC) takes places if a very important order for a very important customer is created or changed and no quantity is available. In such a situation, quantities can be "stolen" from unimportant orders even if they are confirmed. For example, for orders that may be defined as a low priority order, their quantities may be reassigned to high priority orders. ROC is generally not carried out in a batch process. It may be done independently of back order processing. It may be carried out on line.

ROC uses order due lists (ODL), which are described in more detail hereinafter. Order due lists use a filter to select orders. The ODL filtering is used if the order is saved. At the time that the order item is saved, all filters of order due lists are scanned. If an ODL is activated, it is being filled by the system via inbound interface with corresponding OLTP documents.

The ODL is an additional data base element. It has a restricted number of fields. It performs the function of an index. It is assigned to a process, for example, EDQA. It performs a pre-selection. The function performed is that of a sorter. The ODL pre-selection can be edited manually. The pre-selection may be at least one of edited, deleted or overruled. The ODLs can be used as a reference for searching items under consideration of its priority. The order types of the handled items, the criteria to filter, and to sort them can be freely configured. Filter and sorter are defined independent from the ODL.
Selection can be aborted after the number of necessary items is reached. The selection from the ODL obeys the corresponding sort profile.
The ODL has a type. The ODL type defines the nature of items that can be contained in the ODL. The filter assigned to the ODL comprises a filter type and a filter variant. The filter type defines the criteria and the variant contains the values of the criteria to select the items. Per filter type several variants can be defined. The sorter assigned to the ODL contains the criteria to sort the items. Database objects as well as source code is generated out of the settings of an ODL. An ODL comprises a database table with a specific database index, specific source code for table access. The generated database table depends on the criteria that are used to calculate the item priority (sorter). The generated source code for selection from the ODL can be used, for example, by any SAP SCM application.

ODLs can be used during reassignment of quantity confirmations (ROC) as a reference to items that can lose their confirmations and during backorder processing as a work list. Using ODLs a list of items fulfilling the criteria of the filter are selected. The ODL provides an index in the database table, so that all data in the table can be accessed. For example, a sales order that may be stored in LiveCache or 10 database tables where there are around 500 to 800 fields. ODL are linked to the databases, the order ID is used as a key. By accessing the database using a key is fast. The index is used to pre-select very quickly. The index is defined by customizing based on the sorter definition. In this way, the system finds all items associated with the order for BOP.
Order due lists are defined, generated and activated using an ODL builder and ODL agent respectively. Generating of corresponding database tables for storage in ODL 106 is performed by the ODL builder and based on customizable filter and sort parameters. The ODL builder also generates selection source code, which is used during the EDQA and filter source code that is used for filling the index tables. The function of the ODL builder is to build a kind of cross reference for items in accordance with a chain identifier to allow a fast access to the appropriate sales orders. Once the ODL is generated, the generated tables are filled by an ODL agent, for example, in SAP APO. The data 120, for example, "Location product A with confirmed quantity equal zero", to be filled in the generated tables is prepared by the rules based ATP check 16 caused by order processing in the OLTP system, for example, a SAP CRM Order Management system. The data to be filled in the tables may be buffered in an ATP buffer prior to being filled in the tables in a ODL 106 by the ODL agent. The ATP rules evaluation will store the corresponding chain ABC 102 in a temporary data buffer, ATP buffer. The data is stored in the ATP buffer until the document is saved. The ODL is a data base object that may comprise one or more tables. The tables are generated by the ODL building according to sort profiles to allow fast data selection. The ODL builder builds the database tables of ODL in the SAP APO. The table structure depends on the sort profile which is used during the selection of the orders. The sort profile defines the sequence in which the items are to be processed. The sort profile specifies the characteristics, their sequence (or weighting) and the sort direction.

Figure 6 shows an activated ODL according to an embodiment of the invention. The ODL definition 30 includes a predefined filter type 32 and filter variant 40, for example, a filter type: CHAIN XY with filter variant: NR_ONE. This forms a filter where the evaluation of the chain is enabled. All replacements of the chains containing the specified products will enhance the selection range of the product. The ODL definition 30 may also include a sort profile 34, for example, a sort profile: SORT 2. The filter type 32 and the sort profile 34 are customizable. The ODL 30 has an identifier 36 and a name 38. A filter variant 40 with filter conditions for a filter type can be created and used. As mentioned above, the filter selects items corresponding to the particular filter to the particular data base. For example, the filter type may define - parameter - customer type. The filter variant may define parameter value - customer type - very important or medium. The variant can be maintained by clicking on the 'maintain variant' icon 41. The predefined sort profile 34 is chosen. In the example shown, the sort profile 34 is SORT2. Once the ODL is defined, the corresponding table can be generated by clicking on generate icon 42. A generated table can be activated by clicking on the activate icon 44. It can be activated and filled by data stored in a database by clicking on the icon activate and fill 46. In the example shown it is seen that the ODL definition 30 includes a status 48 which shows that the ODL is "activated".
The ODL builder data basis comprises the following object groups: structure for definition of fields valid for all filter types and sort profiles, database tables for filter definition and generation of corresponding program code statements, database tables for sort profile definition and generation of corresponding program code statements and database table for assigning of filter/sort to ODL tables and generation/activation of the tables.
The ODL definition further includes a filter variant definition according to an embodiment of the invention. Having chosen a filter type 32, a filter variant 40 that is valid for the filter type can be chosen. The variant is predefined, i.e. already created and maintained. Further, the filter variant can be maintained. It is also possible to create a filter variant. The filter variant includes the filter conditions according to the filter type parameters. The filter variant 40 and the filter type 32 build together the actual filter 32, 40. Further, a sort profile 34 can be chosen from one of the predetermined, maintained sort profiles. Within the maintenance view screen it is also possible to change ODL description, delete ODLs, generate ODLs, drop and refresh code, activate ODLs 44, activate and fill tables 46, deactivate ODLs. As mentioned, the filter type definition, the sort profile definition can be customized. Based on the sort profile 34, a database table with appropriate database index is generated by clicking on the generate icon 42. Based on the chosen filter 32 and program code template, a program name 50, for example, XYZ, and program code for filling the table by the ODL agent 14 is generated. Based on the chosen sort profile 34 and program code template, a program name 50 and program code for selection from the table by EDQA is generated. Once generated, the status 48 of the ODL becomes GENERATED 52. It is noted that the ODL table, although generated, does not contain any entries at this point. Activation of a table by clicking on the activate icon 44 immediately enables filling it by necessary and eligible index date. The function activate and ill 46 can be used for filling the table with index data of possibly already existing backorder items, which are eligible for the table. The table (filter/sort) can be valid for greater than or equal to 1 trigger events 1. Reassigning a filter/sort makes ODL organization necessary. For example, if it is decided to use a different filter but the existing data does not meet the conditions of reorganizing.
Below the ODL definition a screen shot shows an example of a filter variant. The filter parameters 'product' and 'source location' are chosen and can be maintained.

It is to be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. The mere fact that certain measures are recited in mutually different claims does not indicate that a combination of these measures cannot be used to advantage.

## Claims

1. A system for automatically reassigning an order confirmation in response to an incoming order, the system comprising:
an inbound interface for interfacing with a plurality of data storage devices in at least one of which an incoming order is stored as data and a plurality of confirmed sales orders are stored;
an execution memory operable to hold a software system, and
a processor for coupling to the inbound interface and the execution memory, the processor being operable to execute the software system such that the software system operates:
to determine the eligibility of the incoming order to determine whether goods from at least one of the confirmed sales order may be reassigned to the incoming order, to reassign goods from the at least one of the plurality of confirmed sales order to the incoming order if the determination is positive.

2. A system according to claim 1, wherein the software system operates to determination with respect to the eligibility is embedded in a rules based available to promise determination.

3. A system according to claim 2, wherein the rules based available to promise determination includes a rule defining which orders may be confirmed by reassigning goods from one or more of a plurality of confirmed sales orders.

4. A system according to any of the preceding claims, wherein the software system operates to determines from which of the plurality of confirmed orders, an incoming order may be confirmed using one or more order due lists.

5. A system according to claim 4, wherein the order due lists include a list of those of the plurality of confirmed sales orders which may be reassigned to the incoming order.

6. A system according to claim 5, wherein the order due list is stored in a database and is accessible by the processor.

7. A system according to any of the preceding claims, wherein the software system operates to: de-confirm at least one of the plurality of confirmed sales orders if an incoming sales order is identified as being eligible for a reassignment of goods from a confirmed order.

8. A system according to any of the preceding claims, wherein the software system operates to reassign the goods in real time.

9. A computer implemented method of automatically reassigning an order confirmation in response to a subsequent incoming order, the method comprising:
interfacing with a plurality of data storage devices in at least one of which an incoming order is stored as data and a plurality of confirmed sales orders are stored;
coupling to the inbound interface and the execution memory, executing a software system:
to determine the eligibility of the incoming order to determine whether goods from at least one of the confirmed sales order may be reassigned to the incoming order, to reassign goods from the at least one of the plurality of confirmed sales order to the incoming order if the determination is positive.

10. A user terminal comprising means operable to perform the method of claim 9.

11. A computer readable storage medium storing a program which when run on a computer controls the computer to perform the method of claim 9.
